# EUROPÄISCHE PATENTSCHRIFT

(11) **EP 1 077 839 B1**
(45) Veröffentlichungstag und Bekanntmachung des Hinweises auf die Patenterteilung: **30.10.2002**
(21) Anmeldenummer: 99952086.9
(22) Anmeldetag: 05.05.1999
(51) Int. Cl.: B60R 21/26

(54) **GASSACKANORDNUNG MIT GESTEUERTEM AUFBLASVERHALTEN**
AIRBAG SYSTEM WITH CONTROLLED INFLATION
SYSTEME D'AIRBAG A GONFLAGE REGULE

(30) Priorität: 15.05.1998 DE 19821838
(43) Veröffentlichungstag der Anmeldung: 28.02.2001
(73) Patentinhaber: Autoliv Development AB, 447 83 Vargarda (SE); Bayerische Motoren Werke Aktiengesellschaft, 80809 München (DE)
(72) Erfinder: RAU, Sven, D-80689 München (DE); PANTKE, Siegfried, D-86971 Peiting (DE)
(74) Vertreter: Müller, Karl-Ernst, Dr., Dipl.-Ing.
(86) Internationale Anmeldenummer: EP9903059
(87) Internationale Veröffentlichungsnummer: WO99059846

(56) Entgegenhaltungen:
- EP-A- 0 769 428
- DE-A- 19 620 617
- DE-A- 19 637 603
- US-A- 4 021 058
- US-A- 4 421 342

## Beschreibung

Die Erfindung betrifft eine Gassackanordnung bei einem Sicherheitssystem, insbesondere in Kraftfahrzeugen, mit einem in einem Gasleitgehäuse angeordneten Gasgenerator und wenigstens einem an eine zugeordnete Anschlußöffnung des Gasleitgehäuses angeschlossenen aufblasbaren Gassack und mit einem zu der Anschlußöffnung des Gasleitgehäuses zwischen zwei Stellungen relativ verschiebbaren Schieberelement als Ventilglied zur Steuerung des Aufblasvorganges bei dem Luftsack, wobei das Schieberelement in dem an einer Seite mittels eines als Anschlag für das Schieberelement wirkenden Deckels verschlossenen Gasleitgehäuse translatorisch beweglich und in seiner ersten Stellung unter Ausbildung eines den möglichen Verschiebeweg bildenden Abstandes zu dem Deckel derart angeordnet ist, daß das vom Gasgenerator freigesetzte Gas das Schieberelement einseitig in Richtung seiner zweiten Stellung unter Einstellung eines zu beiden Seiten der Bewegungsrichtung des Schieberelementes bestehenden unterschiedlichen Druckniveaus beaufschlagt.

Eine Gassackanordnung mit den vorgenannten Merkmalen ist in der US 40 06 919 beschrieben; zur Steuerung des Gasflusses von dem Gasleitgehäuse in den Gassack ist in dem Gasleitgehäuse ein Schieberelement angeordnet, welches unter Ausnutzung eines zu beiden Seiten des Schieberelementes sich einstellenden unterschiedlichen Druckniveaus zwischen zwei Stellungen beweglich ist. Mit dieser bekannten Gassackanordnung ist der Nachteil verbunden, daß sich ein oder mehrere weitere Anschlüsse für zusätzliche Gassäcke mit dem bekannten Schieberelement nicht ansteuern lassen.

Aus der DE 196 20 617 A1 ist weiterhin eine Gassackanordnung mit einer Aufblas-Steuerung bekannt, bei welcher der von dem Gasgenerator erzeugte Gasstrom in ein zusätzliches Zwischengehäuse geleitet wird, in welchem ein Bauteil zur Erzeugung eines als Verschiebekraft für ein als Ventilglied zur Steuerung von Anschlußöffnungen für vorzugsweise mehrere Gassäcke wirkendes Schieberelement wirkenden Staudrucks in den Gasstrom hineinragend angeordnet ist; dabei ist das Schieberelement in seiner den Querschnitt der Anschlußöffnungen freigebenden Ausgangsstellung über gesteuert lösbare Befestigungsmittel festgelegt.

Zwar ist es mit der bekannten Aufblassteuerung bereits möglich, das Aufblasen eines oder auch mehrerer angeschlossener Gassäcke, ggf. auch in Abhängigkeit von ermittelten Unfalldaten, zu steuern, wobei die Bewegung des Schieberelements ohne Notwendigkeit von Fremdenergie durch den freigesetzten Gasstrom selbst bewirkt wird, jedoch ist die Steuervorrichtung aufgrund der Einschaltung des Zwischengehäuses und des den Staudruck erzeugenden Bauteils zur Steuerung des eigentlichen Schieberelements aufwendig herzustellen und zu montieren.

Der Erfindung liegt daher die Aufgabe zugrunde, bei einer Gassackanordnung mit den gattungsgemäßen Merkmalen eine einfache und wirksame Steuerung des Aufblasverhaltens von wenigstens zwei an das Gasleitgehäuse angeschlossenen Gassäcken einzurichten.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, daß eine weitere Öffnung zum Anschluß eines weiteren Gassackes auf der dem Deckel des Gasleitgehäuses gegenüberliegenden Seite des Gasleitgehäuses ausgebildet ist und das Schieberelement als eine den rohrförmigen Gasgenerator konzentrisch umgreifende und in dem Ringspalt zwischen Gasgenerator und Gasleitgehäuse zwischen einer Öffnungsstellung und einer Schließstellung für die radial in der Wandung des Gasleitgehäuses ausgebildete Anschlußöffnung verschiebbar angeordnete Schiebehülse ausgebildet ist. Mit der Erfindung ist der Vorteil verbunden, daß das Schieberelement selbst unmittelbar von dem Gasstrom beaufschlagt und angetrieben wird. Aufgrund der Einstellung eines unterschiedlichen Druckniveaus auf beiden Seiten der Bewegungsachse des Schieberelements ergibt sich eine resultierende Kraft in die gewünschte Bewegungsrichtung des Schieberelements, so daß eine entsprechende Verschiebung des Schieberelements von seiner Öffnungsstellung in die Schließstellung innerhalb eines sehr kurzen Zeitraumes zu bewirken ist. Dabei ist die Erfindung besonders wirkungsvoll dann auszuführen, wenn die weitere Öffnung dem Deckel axial gegenüberliegend angeordnet ist.

Nach einem Ausführungsbeispiel der Erfindung kann vorgesehen sein, daß die Schiebehülse wenigstens einen U-förmig in ihrer Längsrichtung verlaufenden und in Richtung der Schließstellung der Schiebehülse geschlossenen Freischnitt zur Freigabe der Gasaustrittsöffnungen des Gasgenerators aufweist. Über den Freischnitt ist eine Überleitung des Gasstromes von den Gasaustrittsöffnungen des Gasgenerators in die radial angeordnete Anschlußöffnung für den Gassack möglich; weiterhin kann durch die Anordnung des Freischnittes oder von mehreren Freischnitten die. wirksame Stirnfläche der Schiebehülse auf ihrer Druckseite verändert und damit ein unterschiedliches Bewegungsverhalten der Schiebehülse eingestellt werden.

Um eine Verdrehung der Schiebehülse gegenüber dem Gasleitgehäuse während ihrer Verschiebebewegung zu verhindern, kann vorgesehen sein, daß die Schiebehülse bei ihrer Verschiebebewegung mittels einer Verdrehsicherung gegenüber dem Gasleitgehäuse geführt ist, wobei vorzugsweise die Verdrehsicherung durch einen in die Wandung des Gasleitgehäuses eingebrachten und in einem Langloch der Schiebehülse geführten Stift verwirklicht sein kann.

In einer weiteren Ausführungsform der Erfindung kann vorgesehen sein, daß das Schieberelement an dem Gasleitgehäuse mit einer seine translatorische Bewegung überlagernden Rotationsbewegung geführt ist, wobei hierdurch gleichzeitig eine Zwangsführung wie auch eine gute Abdichtung zu der Öffnungsstellung gegeben ist, weil die Öffnungsstellung nicht nur axial, sondern auch radial von der Schließstellung versetzt angeordnet ist. Hierzu kann das Schieberelement einen an dem Gasleitgehäuse angeordneten Stift angreifenden, sich spiralförmig in Längsrichtung und in Umfangsrichtung erstreckenden Führungsschlitz aufweisen.

Um den Beginn der Verschiebebewegung der Schiebehülse in Abhängigkeit von dem sich einstellenden Gasdruck definieren zu können, kann vorgesehen sein, daß die Schiebehülse in ihrer Öffnungsstellung mittels eines lösbaren Befestigungsmittels festgelegt ist. In alternativen Ausführungsbeispielen kann das Befestigungsmittel dabei entweder als Scherstift oder als unter Druck lösbare Rastverbindung ausgebildet sein.

In einer alternativen Ausführungsform der Erfindung ist vorgesehen, daß für die Bewegung des Befestigungsmittels in dessen Freigabestellung für die Schiebehülse ein gesonderter Antrieb vorgesehen ist, der insoweit definiert ansteuerbar ist.

Um die Endstellung der Schiebehülse in deren Schließstellung sicher zu definieren, können Haltemittel zur Fixierung der Schiebehülse in deren Schließstellung vorgesehen sein.

Nach einem Ausführungsbeispiel der Erfindung ist vorgesehen, daß der das Gasleitgehäuse einseitig verschließende Deckel Entlastungsbohrungen aufweist; hiermit ist in vorteilhafter Weise sichergestellt, daß im Falle einer nicht ausreichend dichten Führung der Schiebehülse in dem Gasleitgehäuse sich in dem vor dem Deckel befindlichen und den Verschiebeweg der Schiebehülse definierenden Raum aufgrund von zwischen Schiebehülse und Gasleitgehäuse vorbeifließenden Gases kein Gasdruck aufbaut, der der Verschiebebewegung der Schiebehülse entgegenwirken könnte. Dabei kann vorgesehen sein, daß die Entlastungsbohrungen durch die in der Schließstellung befindliche Schiebehülse verschlossen sind.

Die Bewegung der Schiebehülse von deren Öffnungsstellung in deren Schließstellung kann auch dadurch gesteuert werden, daß zwischen Deckel und Schiebehülse eine Feder zur Steuerung der Verschiebebewegung der Schiebehülse in deren Schließstellung angeordnet ist.

Zur Unterstützung der Verschiebebewegung der Schiebehülse kann nach einem Ausführungsbeispiel der Erfindung vorgesehen sein, daß eine die Schiebehülse in deren Schließstellung vorspannende und sich am Gasleitgehäuse abstützende Feder vorgesehen ist.

In einer weiteren Ausführungsform kann die Schiebehülse einen magnetischen Abschnitt aufweisen, dem auf der Außenseite des Gasleitgehäuses ein die Bewegung der Schiebehülse in deren Schließstellung unterstützender Magnet zugeordnet ist, um durch den äußeren Antrieb eine ausreichende Bewegung der Schiebehülse sicherzustellen. Diese Anordnung kann sowohl alternativ zu einem Federantrieb als auch diesen unterstützend zusätzlich vorgesehen sein.

Zur Vermeidung eines Verklemmens der Schiebehülse in dem Gasleitgehäuse, beispielsweise aufgrund von Schmutzpartikeln, kann vorgesehen sein, daß die Schiebehülse mittels einer Gleitdichtung gegen die Wandung des Gasleitgehäuses abgedichtet ist.

In der Zeichnung ist ein Ausführungsbeispiel der Erfindung wiedergegeben, welches nachstehend beschrieben ist. Es zeigen:
- Fig. 1: ein Gasleitgehäuse mit Gasgenerator und Schiebehülse im Schnitt bei Öffnungsstellung der Schiebehülse;
- Fig. 2: den Gegenstand der Fig. 1 in der Schließstellung der Schiebehülse.

Ein Gasleitgehäuse 10 weist eine radial in dessen Wandung angeordnete Anschlußöffnung für einen nicht dargestellten Gassack auf. In das Gasleitgehäuse 10 ist konzentrisch ein rohrförmiger Gasgenerator 12 eingesetzt, der über einen an einer Stirnseite des Gasleitgehäuses 10 eingesetzten Deckel 13 gehaltert und festgelegt ist. Der Deckel 13 umschließt mit einem in den Ringspalt 15 zwischen Gasgenerator 12 und Gasleitgehäuse 10 eingreifenden Absatz 14 den Gasgenerator und sorgt für dessen konzentrische Fixierung. Gleichzeitig wirkt die innere Stirnseite des Absatzes 14 als Anschlag für die noch zu beschreibende Schiebehülse.

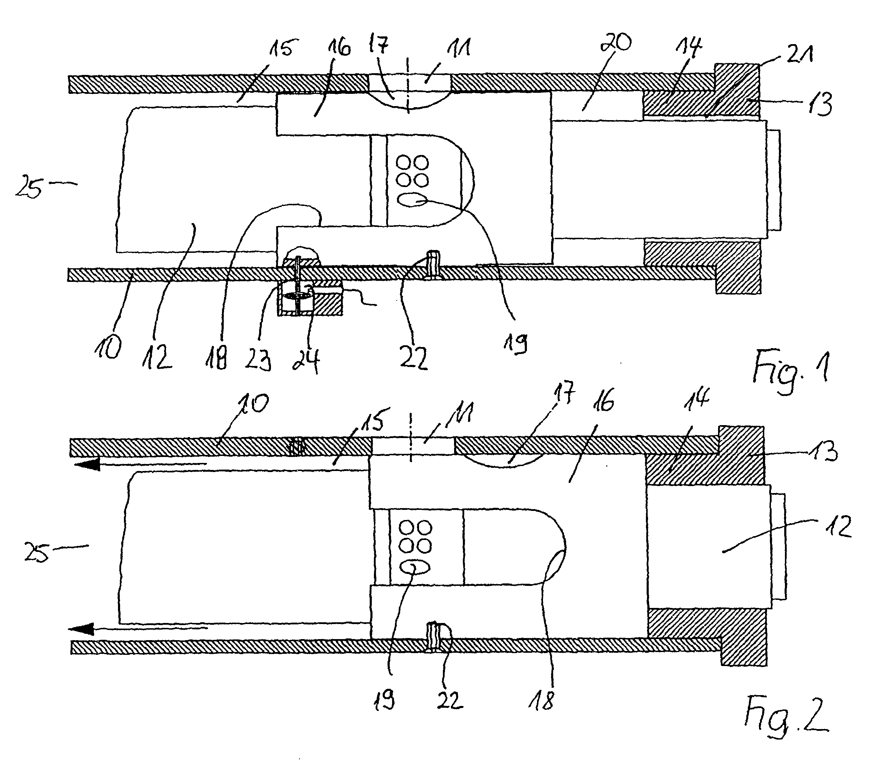

Auf dem Gasgenerator 12 ist eine in dem Ringspalt 15 zwischen Gasgenerator 12 und Gasleitgehäuse 10 eingesetzte Schiebehülse 16 angeordnet und längs des Gasgenerators 12 in Richtung auf den Deckel 13 verschiebbar geführt, wobei die Schiebehülse 16 eine der Anschlußöffnung 11 im Gasleitgehäuse 10 zugeordnete und in der in Fig. 1 dargestellten Öffnungsstellung der Schiebehülse 16 mit der Anschlußöffnung 11 fluchtende Umfangsausnehmung 17 aufweist. Weiterhin ist die Schiebehülse 16 mit wenigstens einem U-förmigen und in Richtung auf den Deckel 13 geschlossenen Freischnitt 18 versehen, der in dem Gasgenerator 12 angeordnete Gasaustrittsöffnungen 19 freigibt und so den Gasstrom nach außen in den Ringspalt 15 und hier über die Umfangsausnehmung 17 der Schiebehülse 16 zur Anschlußöffnung 11 fließen läßt.

In ihrer in Fig. 1 dargestellten Öffnungsstellung weist die Schiebehülse 16 einen Abstand 20 zum stirnseitigen Ende des Absatzes 14 auf, so daß der Abstand 20 den möglichen Verschiebeweg der Schiebehülse 16 definiert. In der aus Fig. 2 dargestellten Schließstellung bildet der Absatz 14 einen Endanschlag für die Bewegung der Schiebehülse 16.

Wie sich aus Fig. 1 ergibt, ist die Schiebehülse 16 gegenüber dem Gasleitgehäuse 10 über eine Verdrehsicherung verdrehgesichert geführt, wobei die Verdrehsicherung durch einen in die Wandung des Gasleitgehäuses 10 eingebrachten und in die Schiebehülse in einen nicht weiter dargestellten Längsschlitz eingreifenden Stift 22 gebildet ist.

In der in Fig. 1 dargestellten Ruhelage ist die Schiebehülse schließlich mittels eines radial beweglichen Stiftes 23 als lösbares Befestigungsmittel festgelegt, wobei dem Stift 23 ein gesonderter, vorzugsweise pyrotechnischer Antrieb 24 zugeordnet ist. Erfolgt eine Auslösung des Antriebs 24, so wird der Stift 23 aus dem Eingriff mit der Schiebehülse 16 herausbewegt, so daß die Schiebehülse 16 für ihre Verschiebebewegung frei ist.

Schließlich ist mit dem Bezugszeichen 25 eine zweite Anschlußöffnung für einen nicht dargestellten Gassack angeordnet, wobei an die Anschlußöffnung 11 beispielsweise ein Gassack zum Schutz des Beckenbereiches eines Fahrzeuginsassen und an die Öffnung 25 ein Gassack zum Schutz des Thorax des Insassen angeschlossen ist.

Bei einem Unfall wird die Sicherheitseinrichtung durch einen nicht dargestellten Sensor aktiviert, wobei der Gasgenerator 12 mittels einer Initiatoreinheit gezündet wird. Das aus den Gasaustrittsöffnungen 19 des Gasgenerators 12 ausströmende Gas strömt teils durch die Umfangsausnehmung 17 der Schiebehülse 16 in die damit fluchtende Anschlußöffnung 11 des Gassackes, der zum Schutz des Beckenbereiches eines Fahrzeuginsassen vorgesehen ist.

Ein anderer Teil des Gasstromes gelangt durch die Gasaustrittsöffnungen 19 des Gasgenerators 12 über den U-förmigen Freischnitt 18 in der Schiebehülse 16 in den dem Deckel 13 abgewandten Bereich des Gasleitgehäuses 10 in Richtung der dort mit dem Bezugszeichen 25 angedeuteten zweiten Anschlußöffnung für den Gassack, der zum Schutz des Thorax eines Fahrzeuginsassen vorgesehen ist.

Da der Außendurchmesser des Gasgenerators 12 und der Innendurchmesser der Schiebehülse 16 unterschiedlich sind, wird zwischen ihnen ein Spalt gebildet, durch welchen Teile des ausströmenden Gasstroms ebenfalls in Richtung der zweiten Anschlußöffnung 25 gelangen.

Da bei der in Figur 1 dargestellten Ausführungsform eine vorgegebene Toleranz zwischen dem Außendurchmesser der Schiebehülse 16 und dem Innendurchmesser des Gasleitgehäuses vorgesehen ist, gelangen Teile des Gasstromes ebenfalls in den dem Deckel 13 zugewandten Bereich des Gasleitgehäuses, in welchem der Abstand 20 verwirklicht ist. Um hier einen Druckausgleich zu gewährleisten, sind bei dem in Figur 1 dargestellten Ausführungsbeispiel Entlastungsbohrungen 21 zur Ventilation des Gases vorgesehen.

Bei der in Figur 2 dargestellten Ausführungsform ist eine Paßform zwischen der Schiebehülse 16 und dem Gasleitgehäuse 10 vorgesehen, so daß kein Gas in den dem Deckel 13 zugewandten Bereich des Gasleitgehäuses 10 mit Abstand 20 gelangen kann. Demzufolge sind bei dem in Figur 2 dargestellten Ausführungsbeispiel auch keine Entlastungsbohrungen 21 ausgebildet.

Der Bereich zwischen der Schiebehülse 16 und dem Deckel 13 mit Abstand 20 ist bei beiden Ausführungsbeispielen gleichermaßen durch ein geringes Druckniveau gekennzeichnet. Demgegenüber erfährt der dem Deckel 13 abgewandte Bereich des Gasleitgehäuses 10 ein höheres Druckniveau, welches durch den vorstehend beschriebenen Gasstrom bewirkt wird.

Aufgrund dieses Druckunterschiedes bildet sich im Zusammenhang mit der Fläche der Schiebehülse 16 eine Kraft aus, die das Lösen eines Befestigungsmittels sowie eine Verschiebebewegung der Schiebehülse 16 in Richtung des Anschlages 14 bewirkt. Bei dem Befestigungsmittel kann es sich beispielsweise um einen Scherstift 22 handeln, der bei einer bestimmten, auf ihn wirkenden Kraft bricht.

Gemäß einer weiteren Ausführungsform kann auch ein radial beweglicher Stift 23 mit einer pyrotechnischen Antriebseinrichtung 24 vorgesehen sein, der durch äußere Kriterien wie Unfallschwere und/oder Insassenüberwachung mittels einer geeigneten Sensorik adaptiv gesteuert ausgelöst werden kann.

Die Schiebehülse 16 erfährt durch den beschriebenen Druckunterschied eine Verschiebebewegung im Gasleitgehäuse 10 in Richtung des Deckels 13, bis die Schiebehülse 16 ihre in Figur 2 dargestellte Schließstellung für die radiale Anschlußöffnung 11 am unteren Ende des Anschlages 14 erreicht. In der Schließstellung der Schiebehülse 16 ist die Anschlußöffnung 11 verschlossen, so daß der restliche Gasstrom vollständig zur zweiten Anschlußöffnung 25 strömt und den Gassack für den Thorax des Insassen weiterhin füllt.

Das Druckniveau im Gassack für den Beckenbereich des Insassen (Anschlußöffnung 11) besitzt seinen definierten Anfangsdruck gerade nach Erreichen der Schließstellung der Schiebehülse 16.

Beispielsweise kann bei einem leichten Fahrzeuginsassen eine frühzeitige Verschiebebewegung der Schiebehülse 16 eingeleitet werden, weil zum Schutze des Beckenbereiches im Vergleich zu einem schweren Insassen nur ein geringes Druckniveau im Gassack erforderlich ist. Entsprechend wird die Steuerung der Verschiebebewegung der Schiebehülse bei einem schweren Insassen sehr spät erfolgen, um ein hohes Druckniveau im an die Anschlußöffnung 11 angeschlossenen Gassack für den Beckenbereich zu erhalten.

Bei einer situationsbedingten Adaption des Gassackes für den Beckenbereich wird zwangsläufig der Gassack für den Thoraxbereich gezielt beeinflußt. Neben den beschriebenen zwei Gassäcken für den Beckenbereich und den Thoraxbereich eines Fahrzeuginsassen können gemäß der Erfindung auch mehr als zwei Gassäcke vorgesehen sein, die über das Gasleitgehäuse 10 mit dem Gas versorgt werden.

## Patentansprüche

1. Gassackanordnung bei einem Sicherheitssystem, insbesondere in Kraftfahrzeugen, mit einem in einem Gasleitgehäuse (10) angeordneten Gasgenerator (12) und wenigstens einem an eine zugeordnete Anschlußöffnung (11) des Gasleitgehäuses angeschlossenen aufblasbaren Gassack und mit einem zu der Anschlußöffnung (11) des Gasleitgehäuses (10) zwischen zwei Stellungen relativ verschiebbaren Schieberelement (16) als Ventilglied zur Steuerung des Aufblasvorganges bei dem Luftsack, wobei das Schieberelement (16) in dem an einer Seite mittels eines als Anschlag (14) für das Schieberelement (16) wirkenden Deckels (13) verschlossenen Gasleitgehäuse (10) translatorisch beweglich und in seiner ersten Stellung unter Ausbildung eines den möglichen Verschiebeweg bildenden Abstandes (20) zu dem Deckel (13) derart angeordnet ist, daß das vom Gasgenerator (12) freigesetzte Gas das Schieberelement (16) einseitig in Richtung seiner zweiten Stellung unter Einstellung eines zu beiden Seiten der Bewegungsrichtung des Schieberelementes (16) bestehenden unterschiedlichen Druckniveaus beaufschlagt, **dadurch gekennzeichnet, daß** eine weitere Öffnung (25) zum Anschluß eines weiteren Gassackes auf der dem Deckel (13) des Gasleitgehäuses (10) gegenüberliegenden Seite des Gasleitgehäuses (10) ausgebildet ist und das Schieberelement als eine den rohrförmigen Gasgenerator (12) konzentrisch umgreifende und in dem Ringspalt (15) zwischen Gasgenerator (12) und Gasleitgehäuse (10) zwischen einer Öffnungsstellung und einer Schließstellung für die radial in der Wandung des Gasleitgehäuses (10) ausgebildete Anschlußöffnung (11) verschiebbar angeordnete Schiebehülse (16) ausgebildet ist.

2. Gassackanordnung nach Anspruch 1, **dadurch gekennzeichnet, daß** die Schiebehülse (16) wenigstens einen U-förmig in ihrer Längsrichtung verlaufenden und in Richtung der Schließstellung der Schiebehülse (16) geschlossenen Freischnitt (18) zur Freigabe der Gasaustrittsöffnungen (19) des Gasgenerators (12) aufweist.

3. Gassackanordnung nach Anspruch 1 oder 2, **dadurch gekennzeichnet, daß** die Schiebehülse (16) bei ihrer Verschiebebewegung mittels einer Verdrehsicherung (22) gegenüber dem Gasleitgehäuse (10) geführt ist.

4. Gassackanordnung nach Anspruch 3, **dadurch gekennzeichnet, daß** als Verdrehsicherung das Gasleitgehäuse (10) einen in einen in der Schiebehülse (16) befindlichen geradlinig verlaufenden Längsschlitz eingreifenden Stift (22) aufweist.

5. Gassackanordnung nach einem der Ansprüche 1 bis 3, **dadurch gekennzeichnet, daß** das Schieberelement (16) an dem Gasleitgehäuse (10) mit einer seine translatorische Bewegung überlagernden Rotationsbewegung geführt ist.

6. Gassackanordnung nach Anspruch 5, **dadurch gekennzeichnet, daß** das Schieberelement (16) einen an dem Gasleitgehäuse (10) angeordneten Stift (22) angreifenden, sich spiralförmig in Längsrichtung sowie in Umfangsrichtung erstreckenden Führungsschlitz aufweist.

7. Gassackanordnung nach einem der Ansprüche 2 bis 6, **dadurch gekennzeichnet, daß** die Schiebehülse (16) in ihrer Öffnungsstellung mittels eines lösbaren Befestigungsmittels (23) festgelegt ist.

8. Gassackanordnung nach Anspruch 7, **dadurch gekennzeichnet, daß** zur Bewegung des Befestigungsmittels (23) in dessen Freigabestellung für die Schiebehülse (16) ein Antrieb (24) vorgesehen ist.

9. Gassackanordnung nach Anspruch 7, **dadurch gekennzeichnet, daß** das Befestigungsmittel als Scherstift ausgebildet ist.

10. Gassackanordnung nach Anspruch 7, **dadurch gekennzeichnet, daß** das Befestigungsmittel als unter Druck lösbare Rastverbindung ausgebildet ist.

11. Gassackanordnung nach einem der Ansprüche 1 bis 10, **dadurch gekennzeichnet, daß** Haltemittel zur Fixierung der Schiebehülse (16) in deren Schließstellung am Gasleitgehäuse (10) vorgesehen sind.

12. Gassackanordnung nach einem der Ansprüche 1 bis 11, **dadurch gekennzeichnet, daß** der das Gasleitgehäuse einseitig verschließende Deckel (13) Entlastungsbohrungen (21) aufweist.

13. Gassackanordnung nach Anspruch 12, **dadurch gekennzeichnet, daß** die Entlastungsbohrungen (21) durch die in der Schließstellung befindliche Schiebehülse (16) verschlossen sind.

14. Gassackanordnung nach einem der Ansprüche 1 bis 13, **dadurch gekennzeichnet, daß** zwischen Deckel (13) und Schiebehülse (16) eine Feder zur Steuerung der Verschiebebewegung der Schiebehülse (16) angeordnet ist.

15. Gassackanordnung nach einem der Ansprüche 1 bis 14, **dadurch gekennzeichnet, daß** eine die Schiebehülse (16) in deren Schließstellung vorspannende und sich am Gasleitgehäuse (10) abstützende Feder vorgesehen ist.

16. Gassackanordnung nach einem der Ansprüche 1 bis 15, **dadurch gekennzeichnet, daß** die Schiebehülse (16) einen magnetischen Abschnitt aufweist und auf der Außenseite des Gasleitgehäuses (10) ein die Bewegung der Schiebehülse (16) in deren Schließstellung unterstützender Magnet angeordnet ist.

17. Gassackanordnung nach einem der Ansprüche 1 bis 16, **dadurch gekennzeichnet, daß** die Schiebehülse (16) mittels einer Gleitdichtung gegen die Wandung des Gasleitgehäuses (10) abgedichtet ist.

18. Gassackanordnung nach einem der Ansprüche 1 bis 17, **dadurch gekennzeichnet, daß** in einem Gasleitgehäuse (10) mehrere Anschlußöffnungen (11) mit jeweils einer zugeordneten Schiebehülse (16) angeordnet sind.

## Claims

1. Airbag arrangement in a safety system, especially in motor vehicles, with a gas generator (12) arranged in a gas guide housing (10) and at least one inflatable airbag connected to an assigned connection opening (11) of said gas guide housing, and with a sliding element (16) that can be displaced between two positions relative to said connection opening (11) of said gas guide housing (10) as a valve member for controlling the inflation process of said airbag, whereby said sliding element (16) can be translationally moved in said gas guide housing (10) that is sealed with a cover (13) at one side, said cover acting as a stop (14) for said sliding element (16), and said sliding element in its first position is arranged at a distance (20) to said cover (13) that constitutes the possible displacement path such that the gas released by said gas generator (12) acts on one side of said sliding element (16) causing the pressure level on each side of the direction of movement of said sliding element (16) to be different and causing said sliding element to move in the direction of its second position, **characterized in that** an additional opening (25) for connecting an additional airbag is formed on the side of said gas guide housing (10) opposite said cover (13) of said gas guide housing (10) and said sliding element is embodied as a sliding sleeve (16) that concentrically surrounds said tubular gas generator (12) and that is displaceably arranged in the annular gap (15) between gas generator (12) and gas guide housing (10) between an open position and a closed position for said connection opening (11), which is radially formed in the wall of said gas guide housing (10).

2. Airbag arrangement in accordance with claim 1, **characterized in that** said sliding sleeve (16) has at least one U-shaped open section (18) running in its longitudinal direction and closed in the direction of the closed position of said sliding sleeve (16) for exposing the gas discharge openings (19) of said gas generator (12).

3. Airbag arrangement in accordance with claim 1 or 2, **characterized in that** said sliding sleeve (16) is guided during its displacement relative to said gas guide housing (10) by means of an anti-rotation element (22).

4. Airbag arrangement in accordance with claim 3, **characterized in that** said gas guide housing (10) has as an anti-rotation element a pin (22) that engages in a longitudinal slot that runs in a straight line and is located in said sliding sleeve (16).

5. Airbag arrangement in accordance with any of claims 1 through 3, **characterized in that** said sliding element (16) is guided on said gas guide housing (10) with a rotational movement that overlaps its translational movement.

6. Airbag arrangement in accordance with claim 5, **characterized in that** said sliding element (16) has a guide slot that engages the pin (22) which is arranged on said gas guide housing (10), that is longitudinally helical, and that extends circumferentially.

7. Airbag arrangement in accordance with any of claims 2 through 6, **characterized in that** said sliding sleeve (16) is fixed in its open position by means of releasable fastening means (23).

8. Airbag arrangement in accordance with claim 7, **characterized in that** a separate drive (24) is provided for said sliding sleeve (16) for moving said fastening means (23) into its release position.

9. Airbag arrangement in accordance with claim 7, **characterized in that** said fastening means is a shear pin.

10. Airbag arrangement in accordance with claim 7, **characterized in that** said fastening means is a locking connection that is releasable under pressure.

11. Airbag arrangement in accordance with any of claims 1 through 10, **characterized in that** retaining means are provided for fixing said sliding sleeve (16) in its closed position on the gas guide housing (10).

12. Airbag arrangement in accordance with any of claims 1 through 11, **characterized in that** said cover (13) that closes said gas guide housing on one side has relief bores (21).

13. Airbag arrangement in accordance with claim 12, **characterized in that** said relief bores (21) are sealed by said sliding sleeve (16) when it is located in the closed position.

14. Airbag arrangement in accordance with any of claims 1 through 13, **characterized in that** arranged between cover (13) and sliding sleeve (16) is a spring for controlling the displacement of said sliding sleeve (16).

15. Airbag arrangement in accordance with any of claims 1 through 14, **characterized in that** a spring is provided that biases said sliding sleeve (16) in its closed position and that is supported on said gas guide housing (10).

16. Airbag arrangement in accordance with any of claims 1 through 15, **characterized in that** said sliding sleeve (16) has a magnetic section and provided on the exterior side of said gas guide housing (10) is a magnet that assists the movement of said sliding sleeve (16) into its closed position.

17. Airbag arrangement in accordance with any of claims 1 through 16, **characterized in that** said sliding sleeve (16) is sealed against the wall of said gas guide housing (10) by means of a sliding seal.

18. Airbag arrangement in accordance with any of claims 1 through 17, **characterized in that** a plurality of connection openings (11), each with an allocated sliding sleeve (16), can be arranged in one gas guide housing (10).

## Revendications

1. Agencement de poches à gaz dans un système de sécurité, en particulier dans des véhicules à moteur, avec un générateur de gaz (12) disposé dans un carter de guidage des gaz (10) et au moins une poche à gaz gonflable raccordée à une ouverture de raccordement associée (11) du carter de guidage des gaz et avec un élément coulissant (16) mobile entre deux positions par rapport à l'ouverture de raccordement (11) du carter de guidage des gaz (10) en tant qu'élément de soupape pour commander le processus de gonflage de la poche à air, l'élément coulissant (16) étant mobile en translation dans le carter de guidage des gaz (10) fermé d'un côté au moyen d'un couvercle (13) jouant le rôle d'une butée (14) pour ledit élément coulissant (16) et étant disposé dans sa première position en formant, par rapport au couvercle (13) un écartement (20) représentant la course de déplacement possible, de façon que le gaz libéré par le générateur de gaz (12) alimente l'élément coulissant (16) d'un côté en direction de sa deuxième position en établissant un niveau de pression différent des deux côtés de la direction de déplacement de l'élément coulissant, **caractérisé en ce qu'**une autre ouverture (25) est formée pour le raccordement d'une autre poche à gaz du côté du carter de guidage des gaz (10) opposé au couvercle (13) dudit carter, et **en ce que** l'élément coulissant est conçu comme un manchon coulissant (16) entourant de manière concentrique le générateur de gaz de forme tubulaire (12) et disposé de manière à pouvoir se déplacer dans l'espace annulaire (15) entre le générateur de gaz (12) et le carter de guidage des gaz (10), entre une position d'ouverture et une position de fermeture de l'ouverture de raccordement formée radialement dans la paroi du carter de guidage des gaz (10).

2. Agencement de poches à gaz selon la revendication 1, **caractérisé en ce que** le manchon coulissant (16) présente au moins une section libre (18) en forme de U orientée dans sa direction longitudinale et fermée en direction de la position de fermeture du manchon coulissant (16) afin de libérer les orifices de sortie de gaz (19) du générateur de gaz (12).

3. Agencement de poches à gaz selon la revendication 1 ou 2, **caractérisé en ce que** le manchon coulissant (16) est guidé, lors de son mouvement de déplacement, au moyen d'un dispositif de sécurité à la torsion (22) par rapport au carter de guidage des gaz (10).

4. Agencement de poches à gaz selon la revendication 3, **caractérisé en ce que** le carter de guidage des gaz (10) présente, comme dispositif de sécurité à la torsion, un goujon (22) s'engageant dans une fente longitudinale, en forme de ligne droite, du manchon coulissant (16).

5. Agencement de poches à gaz selon l'une quelconque des revendications 1 à 3, **caractérisé en ce que** l'élément coulissant (16) est guidé le long du carter de guidage des gaz (10) avec un mouvement de rotation se superposant à son mouvement de translation.

6. Agencement de poches à gaz selon la revendication 5, **caractérisé en ce que** l'élément coulissant (16) présente une fente de guidage s'étendant en spirale dans la direction longitudinale ainsi que dans la direction périphérique, saisissant un goujon (22) disposé sur le carter de guidage des gaz (10).

7. Agencement de poches à gaz selon l'une quelconque des revendications 2 à 6, **caractérisé en ce que** le manchon coulissant (16) est fixé dans sa position d'ouverture à l'aide d'un moyen de fixation (23) séparable.

8. Agencement de poches à gaz selon la revendication 7, **caractérisé en ce qu'**il est prévu un entraînement (24) pour déplacer le moyen de fixation (23) dans sa position de libération du manchon coulissant (16).

9. Agencement de poches à gaz selon la revendication 7, **caractérisé en ce que** le moyen de fixation est conçu comme un goujon de cisaillement.

10. Agencement de poches à gaz selon la revendication 7, **caractérisé en ce que** le moyen de fixation est conçu comme un assemblage encliquetable séparable sous pression.

11. Agencement de poches à gaz selon l'une quelconque des revendications 1 à 10, **caractérisé en ce que** des moyens de retenue, pour fixer le manchon coulissant (16) dans sa position de fermeture, sont prévus sur le carter de guidage des gaz (10).

12. Agencement de poches à gaz selon l'une quelconque des revendications 1 à 11, **caractérisé en ce que** le couvercle (13) fermant d'un côté le carter de guidage des gaz présente des orifices de décharge (21).

13. Agencement de poches à gaz selon la revendication 12, **caractérisé en ce que** les orifices de décharge (21) sont fermés par le manchon coulissant (16) se trouvant dans la position de fermeture.

14. Agencement de poches à gaz selon l'une quelconque des revendications 1 à 13, **caractérisé en ce qu'**un ressort est disposé entre le couvercle (13) et le manchon coulissant (16) pour commander le mouvement de déplacement du manchon coulissant (16).

15. Agencement de poches à gaz selon l'une quelconque des revendications 1 à 14, **caractérisé en ce qu'**il est prévu un ressort assurant la prétension du manchon coulissant (16) dans sa position de fermeture et s'appuyant sur le carter de guidage des gaz (10).

16. Agencement de poches à gaz selon l'une quelconque des revendications 1 à 15, **caractérisé en ce que** le manchon coulissant (16) présente un segment magnétique, et **en ce qu'**un aimant contribuant au mouvement du manchon coulissant (16) dans sa position de fermeture est disposé du côté extérieur du carter de guidage des gaz (10).

17. Agencement de poches à gaz selon l'une quelconque des revendications 1 à 16, **caractérisé en ce que** le manchon coulissant (16) est rendu étanche par rapport à la paroi du carter de guidage des gaz (10) au moyen d'un joint de glissement.

18. Agencement de poches à gaz selon l'une quelconque des revendications 1 à 17, **caractérisé en ce que** plusieurs ouvertures de raccordement (11), avec chacune un manchon coulissant (16) associé, sont disposées dans un carter de guidage des gaz.
